# FASCICULE DE BREVET EUROPEEN

(11) **EP 1 945 893 B1**
(45) Date de publication et mention de la délivrance du brevet: **14.04.2010**
(21) Numéro de dépôt: 06820183.9
(22) Date de dépôt: 11.10.2006
(51) Int. Cl.: E05D 11/10, G02C 5/22, F16C 11/10, B25J 17/02

(54) **MECANISME PERMETTANT UN MOUVEMENT RELATIF ENTRE DEUX PIECES RIGIDES, MAIS DOTE D'UN MOYEN ANTI-ROTATION.**
EINE RELATIVBEWEGUNG ZWISCHEN ZWEI STARREN TEILEN GESTATTENDER MECHANISMUS, DER ABER MIT DREHVERHINDERUNGSMITTELN VERSEHEN IST
MECHANISM ALLOWING A RELATIVE MOVEMENT BETWEEN TWO RIGID PARTS, BUT PROVIDED WITH ANTI-ROTATION MEANS

(30) Priorité: 20.10.2005 FR 0510706
(43) Date de publication de la demande: 23.07.2008
(73) Titulaire: Chene, Richard, 92200 Neuilly-sur-Seine (FR); Delamour, Dominique, 78490 Les Mesnuls (FR); Miklitarian, Alain, 75014 Paris (FR); Rodi, Olivier, 78950 Gambais (FR)
(72) Inventeur: Chene, Richard, 92200 Neuilly-sur-Seine (FR); Delamour, Dominique, 78490 Les Mesnuls (FR); Miklitarian, Alain, 75014 Paris (FR); Rodi, Olivier, 78950 Gambais (FR)
(74) Mandataire: Sauvage, Renée
(86) Numéro de dépôt international: PCT/FR2006/002278
(87) Numéro de publication internationale: WO 2007/045742

(56) Documents cités:
- FR-A- 2 850 143
- FR-E- 85 844
- US-B1- 6 826 801

## Description

La présente invention a pour objet un mécanisme permettant de solidariser deux pièces l'une à l'autre en leur permettant d'avoir, l'une par rapport à l'autre, une certaine faculté de pivotement, un tel mécanisme trouvant son application, notamment, dans les équipements utilisés en robotique et les montures de lunettes.

Ce mécanisme peut être dépourvu d'axe matériel de rotation, auquel cas on parlera d'articulation, ou comporter un tel axe matériel de rotation auquel cas on parlera de charnière.

Plus précisément, l'invention concerne un mécanisme du type précité agencé entre une extrémité d'un premier élément rigide et une extrémité d'un second élément rigide, lesdites extrémités présentant des surfaces d'appui aptes à s'appairer respectivement l'une sur l'autre, des moyens élastiques étant prévus pour maintenir l'appui entre lesdites surfaces.

La plupart des équipements utilisés en robotique (robots marcheurs, robots modulaires, robotique manufacturière, robotique médicale, micro-robotique, etc.) sont munis d'articulations permettant un pivotement sur une plage angulaire continue et, souvent, dans une multiplicité de plans. De telles articulations permettent aux équipements d'effectuer, dans l'espace atteignable, une grande variété d'actions et de déplacements. Cependant, les mécanismes de ces articulations sont par nature instables, ou mono-stables en position de repos, et il s'ensuit que ces équipements sollicitent en permanence leur actionneur (par exemple, un vérin de commande) pour les maintenir dans une position choisie, dès qu'il ne s'agit pas de leur position de repos.

Or, un pivotement sur une plage peut n'être ni nécessaire, ni même souhaitable.

Ainsi, en robotique médicale, l'utilisation sur une plage continue des optiques à visées variables n'intéresse pas réellement les chirurgiens. De même, les débattements des endoscopes poly-articulés, tels qu'ils sont utilisés en pratique, avoisinent le "tout ou rien".

En robotique manufacturière, la continuité de la plage de pivotement nuit, en outre, à la précision et à la répétitivité de positionnement dans la durée.

S'agissant des robots marcheurs, ils n'ont pas nécessairement besoin de pattes dont l'espace atteignable soit continu.

En bref, un concept d'articulation discrète réduirait les coûts, limiterait la sollicitation du ou des actionneurs et, dans le cas de la robotique manufacturière, garantirait, dans le temps, la précision du positionnement.

Dans le domaine de la lunetterie, et d'autres (ouvrants d'automobiles, ouvrants de mobilier, par exemple), il est parfois fait usage de charnières dites "élastiques" adaptées à maintenir la partie mobile dans une ou deux positions stables, (telles que positions fermée et ouverte d'une branche de lunettes, par exemple) .

Ces charnières "élastiques" sont, pour la plupart, munies d'un axe de rotation qui limite le déplacement de la partie mobile à un déplacement dans un plan donné.

On connaît aussi, d'après EP-A-0 886 712, des charnières de lunettes dont les parties mobile et fixe sont reliées par un lien élastique, permettant un déplacement de la partie mobile dans n'importe quel plan, entre des limites fixées : ces charnières ont certes un effet séduisant, mais elles sont complexes à fabriquer et à miniaturiser, et leur relative fragilité est mise à rude épreuve par les porteurs qui ont tendance à jouer avec les branches. Ces charnières ne sont pas adaptées à se maintenir dans plusieurs positions stables dans plusieurs plans et/ou à être munies d'un dispositif actionneur qui permettrait de passer d'une position stable à une autre.

Il a été proposé dans FR-A-2 850 143 une articulation susceptible de permettre à deux éléments rigides (respectivement fixe et mobile) d'occuper diverses positions angulaires relatives stables et/ou instables, l'extrémité de l'élément mobile opposée à l'articulation se déplaçant le long de trajectoires linéaires répétitives, sans qu'il soit nécessaire de solliciter l'éventuel dispositif actionneur dont pourrait être munie l'articulation.

A cette fin, FR-A-2 850 143 a proposé un système d'articulation du type précité qui comporte deux pièces-pivots présentant, chacune, une zone évidée limitée par une surface au moins en partie courbe, chacune desdites pièces-pivots dépendant respectivement d'un desdits éléments rigides, lesdites pièces-pivots étant sensiblement orthogonales l'une à l'autre, et engagées l'une dans l'autre par interpénétration de leur zone évidée respective de façon à pouvoir pivoter l'une par rapport à l'autre, à la manière des maillons d'une chaîne.

FR-A-2 850 143 indique que l'une des pièces-pivots est avantageusement fermée (anneau, boucle, etc.) et l'autre ouverte (crochet) car cela peut faciliter le montage ou le démontage.

En réalité, cependant, sauf s'il est indéformable, le crochet ne peut pas être laissé ouvert après montage et il est nécessaire de le fermer par soudure, opération minutieuse et consommatrice de temps. Il s'ensuit une augmentation du prix de revient du produit. En outre, il n'est pas possible de démonter l'articulation sans détruire ce point de soudure.

Le recours à un crochet indéformable, qui ne peut donc s'ouvrir sous la traction, nécessite, lui, d'utiliser un fil suffisamment gros, ce qui entraîne à la fois des problèmes d'encombrement et des problèmes de mise en oeuvre puisque, tout en débouchant sur un crochet indéformable en service, il faut bien que le fil soit déformable pour permettre la réalisation du crochet.

La présente invention a pour objectif de résoudre cette difficulté.

A cette fin, elle propose un mécanisme qui comprend, comme FR-A-2 850 143, d'une part, une pièce-pivot en forme de crochet pourvu d'une queue rectiligne montée coulissante dans un logement dépendant d'un desdits éléments rigides, et, d'autre part, une pièce coopérante dépendant de l'autre desdits éléments rigides, ladite pièce-pivot et ladite pièce coopérante étant sensiblement orthogonales l'une à l'autre, et la pièce coopérante étant engagée dans la zone évidée délimitée par la partie courbe du crochet, le mécanisme se distinguant toutefois de FR-A-2 850 143 par le fait qu'à son extrémité opposée à ladite queue, ladite partie courbe du crochet comporte une extension rectiligne et parallèle à ladite queue et un fourreau est adapté à recevoir ladite extension, ladite extension étant susceptible d'un déplacement en translation rectiligne et parallèle à ladite queue, tout en restant engagée en permanence dans ledit fourreau.

Grâce à cette disposition, il n'est plus nécessaire de réaliser le crochet de façon qu'il soit indéformable en service ou de fermer le crochet par un point de soudure, cette fermeture se faisant par pénétration de l'extension rectiligne dans le fourreau prévu à cet effet.

Dans une première forme d'exécution, le fourreau est constitué par une partie de l'extrémité de l'élément rigide dans lequel est ménagé ledit logement, ledit fourreau déterminant une cavité adjacente audit logement et propre à recevoir ladite extension.

Cette cavité peut être un trou traversant mais, de préférence, il s'agit d'un trou borgne pour des raisons de solidité générale et d'aspect.

L'extension rectiligne peut être immobilisée en place par insertion à force dans la cavité du fourreau. Cependant, dans une forme d'exécution préférée, la queue du crochet est sollicitée par des moyens élastiques dans la direction d'insertion de l'extension rectiligne, ce qui maintient l'extension engagée dans son fourreau.

De plus et avantageusement, la queue du crochet constitue un tirant captif dudit logement, ledit tirant coopérant avec lesdits moyens élastiques pour contraindre les faces d'appui desdits éléments rigides à demeurer en contact l'une avec l'autre et, simultanément, maintenir ladite extension engagée dans son fourreau.

La géométrie de la section transversale de la cavité du fourreau correspond à celle de l'extension rectiligne et elle sera généralement circulaire, mais rien n'empêche qu'elle soit autre (carrée, rectangulaire, etc.) si les éléments rigides sont réalisés par moulage.

Dans une forme d'exécution particulière de l'invention, ledit logement comporte, séparées par une cloison, une partie proximale dans laquelle ledit crochet est captif et une partie distale, ledit fourreau déterminant une cavité, de section transversale oblongue, qui communique longitudinalement avec la partie proximale dudit logement. La fabrication de l'élément rigide dans lequel sont ménagés ledit logement et ladite cavité de fourreau s'en trouve facilitée, ces deux creusures pouvant être usinées simultanément sans la nécessité de ménager une mince et délicate cloison entre elles.

Dans une première forme d'exécution de l'invention, formant articulation, la pièce qui coopère avec la pièce-pivot précitée est, elle aussi, une pièce-pivot présentant une zone évidée limitée par une surface au moins partiellement courbe, ledit crochet étant engagé dans ladite seconde pièce-pivot par pénétration dans sa zone évidée, de sorte que les deux pièces-pivots peuvent pivoter l'une par rapport à l'autre, à la manière des maillons d'une chaîne.

Avantageusement, ladite seconde pièce-pivot est un anneau.

Dans une seconde forme d'exécution de l'invention, formant charnière, ladite pièce qui coopère avec la pièce-pivot en forme de crochet est un axe.

Dans une application particulière de l'invention, lesdits éléments rigides sont respectivement une branche et une face de lunettes.

Dans une autre application particulière de l'invention, lesdits éléments rigides appartiennent à une suite articulée pour un usage en robotique.

L'invention va maintenant être décrite avec davantage de détails par référence aux dessins annexés dans lesquels
- les figures 1a à 1c illustrent l'état antérieur de la technique selon FR-A-2 850 143 ;
- la figure 2 est une représentation des différentes pièces constitutives du mécanisme selon l'invention, appliqué à la réalisation d'une articulation capable d'une désarticulation sur 90° ,
- la figure 3 est une coupe de l'articulation résultant du montage des pièces illustrées à la figure 2, dans une première position ;
- la figure 4 est une vue semblable à la figure 3, mais dans une autre position, et avec omission des ressorts ;
- la figure 5 est une vue en perpective de l'articulation des figures 3 et 4, avec omission d'une partie de l'élément fixe pour montrer le ressort qu'il renferme ;
- les figures 6a et 6b représentent, respectivement, en coupe longitudinale et en perpective, l'extrémité de l'élément fixe de la forme d'exécution des figures 3 à 5 ;
- les figures 7a et 7b représentent, respectivement, en coupe longitudinale et en perpective, une variante d'exécution de l'extrémité de l'élément fixe de la forme d'exécution des figures 3 à 5 ;
- la figure 8a est une vue en perspective d'une variante du mécanisme selon l'invention, appliqué à la réalisation d'une articulation capable d'une désarticulation sur 45°;
- la figure 8b est une vue identique à la figure 8a mais avec omission du logement de l'élément mobile ;
- les figures 9a-9c sont des vues en perspective d'une variante du mécanisme selon l'invention, appliqué à la réalisation d'une articulation capable d'une désarticulation sur environ 25° ;
- les figures 10a et 10b illustrent l'application de l'invention à une charnière, respectivement, en cours de montage et après montage, seul l'un des éléments rigides auquel l'invention est appliquée étant représenté pour la clarté du dessin ;
- la figure 11 est une coupe prise dans le plan axial P de la figure 10b, avec représentation d'une partie des deux éléments rigides ;
- les figures 12a-12c représentent la zone de la charnière des figures 10a,10b et 11 en position alignée (figure 12a) et déboîtée (figures 12b-12c), la charnière étant capable d'une désarticulation sur environ 10°.

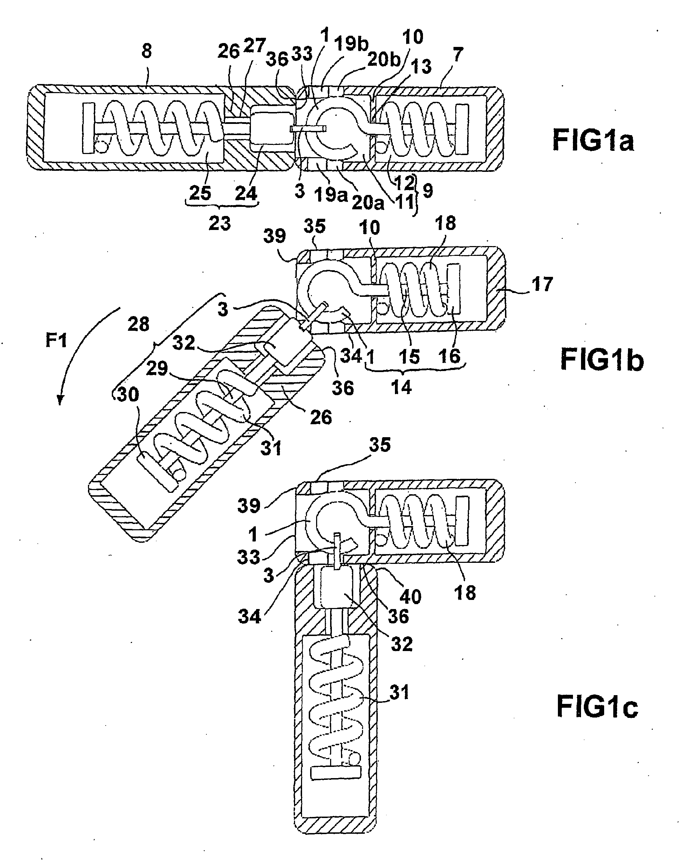

Les figures 1a, 1b et 1c illustrent une articulation de l'art antérieur, reposant sur la coopération d'un crochet 1 et d'un maillon 3, ladite articulation étant observée dans le plan du crochet 1, respectivement dans une première position stable, dans une position instable et dans une deuxième position stable(pour plus de détails, se reporter à FR-A-2 850 143).

Comme il ressort de ces figures, le système d'articulation de l'art antérieur est monté partiellement dans un premier élément rigide 7, dit "fixe", et partiellement dans un deuxième élément rigide 8, dit "mobile". Il est bien entendu que cette distinction entre élément "mobile" et élément "fixe" peut être artificielle dans la mesure où, dans certains cas, chacun des éléments peut être considéré comme "mobile" par rapport à l'autre.

L'élément fixe 7 définit un logement 9 divisé par une cloison 10 en une partie proximale 11 (proximale par rapport à l'articulation) et une partie distale 12. Un passage 13 est ménagé dans la cloison 10 pour un tirant 14. Le tirant 14 est composé d'une tige ou queue 15 dont l'extrémité proximale forme le crochet 1 et dont l'extrémité distale est pourvue d'une pièce d'arrêt 16. Cette pièce d'arrêt 16 peut être la tête d'une vis vissée dans la queue 15 du crochet 1, un passage non représenté étant prévu dans le fond 17 du logement 9 pour l'introduction de cette vis et de l'extrémité d'un tournevis. Un ressort à boudin 18 est enfilé sur la queue 15 et prend appui, d'une part, sur la pièce d'arrêt 16, d'autre part, sur la cloison 10. La paroi de la partie proximale 11 du logement 9 présente deux encoches 19a et 19b situées dans le plan du crochet 1, à chacune desquelles fait suite une rampe 20a et 20b.

L'élément mobile 8 comporte, de même, un logement 23 séparé en une partie proximale 24 et une partie distale 25 par une cloison 26, dans laquelle est ménagé un passage 27 pour un tirant 28. Le tirant 28 est composé d'une tige 29 dont l'extrémité proximale est solidaire d'un bloc parallélépipèdique 32, formant organe anti-rotation, de dimensions sensiblement voisines de celle de la partie proximale 24 du logement 23 et qui se prolonge par une plaque carrée 3 présentant un perçage circulaire, plaque appelée ci-après le maillon 3. L'extrémité distale de la tige 29 est pourvue d'une pièce d'arrêt 30 qui, comme la pièce d'arrêt 16, peut être une tête de vis. Un ressort à boudin 31 est enfilé sur la tige 29 et prend appui, d'une part, sur la pièce d'arrêt 30, d'autre part, sur la cloison 26.

L'extrémité proximale de l'élément fixe 7 présente trois face d'appui 33, 34 et 35 et l'extrémité proximale de l'élément mobile 8 présente une face d'appui 36. Les bords 39 et 40 de l'extrémité proximale des éléments fixe et mobile 7 et 8 sont arrondis pour faciliter le mouvement relatif entre les deux éléments.

La tension des ressorts est choisie pour qu'en position stable, le ressort 18 maintienne le crochet 1 en retrait par rapport à la face d'appui 33 et que le ressort 31 maintienne le bloc 32 de telle sorte que sa face proximale affleure la face d'appui 36.

A la figure 1a, l'ensemble occupe une première position stable dans laquelle les éléments fixe 7 et mobile 8 sont dans l'alignement l'un de l'autre, la face d'appui 36 de l'élément mobile 8 étant appliquée contre la face d'appui 33 de l'élément fixe. Dans cette position, le crochet 1 est en retrait par rapport à la face d'appui 33 et le maillon. 3 est reçu dans la partie proximale 11 du logement 9 de l'élément fixe 7.

A la figure 1b, l'élément mobile 8 a été "déboîté" par rapport à la position qu'il occupait à la figure 1a pour pouvoir pivoter selon la flèche F1. Ce déboîtement est rendu possible par une traction exercée par le maillon 3 sur le crochet 1, à l'encontre de la force des ressorts 18 et 31 qui s'en trouvent comprimés. On peut voir que le crochet 1 affleure maintenant la face d'appui 33 et que le bloc 32 fait légèrement saillie hors de l'élément mobile 8. Le pivotement est également rendu possible par la présence de l'encoche 19a qui autorise le passage du maillon 3 et du bloc 32.

A la figure 1c, la face d'appui 36 de l'élément mobile 8 est maintenant appliquée contre la face d'appui 34 de l'élément fixe 7. Le crochet 1 et le bloc 32 ont repris leurs positions de la figure la et les ressorts 18 et 31 sont également revenus à leur degré de tension initial. Le maillon 3 est en contact avec 1a rampe 20a par sa tranche non visible, tandis que sa tranche visible est en contact avec une autre rampe, non visible, symétrique à la rampe 20a.

On comprend que, l'élément fixe 7 comportant une deuxième encoche 19b à l'opposé de l'encoche 19a, l'élément mobile 8 pourrait être amené dans une troisième position stable, à savoir avec sa face d'appui 36 appliquée contre la face d'appui 35 de l'élément fixe 7.

Alors que, dans les figures 1a-1c, le crochet 1 est représenté ouvert, dans la pratique, une fois enfilé dans le maillon 3, il doit être fermé par un point de soudure, opération délicate compte tenu de la très petite dimension des pièces concernées et qui augmente le coût en main d'oeuvre. S'il n'est pas soudé, le crochet doit être réalisé de façon à être indéformable, avec les problèmes d'encombrement et de mise en oeuvre rappelés plus haut.

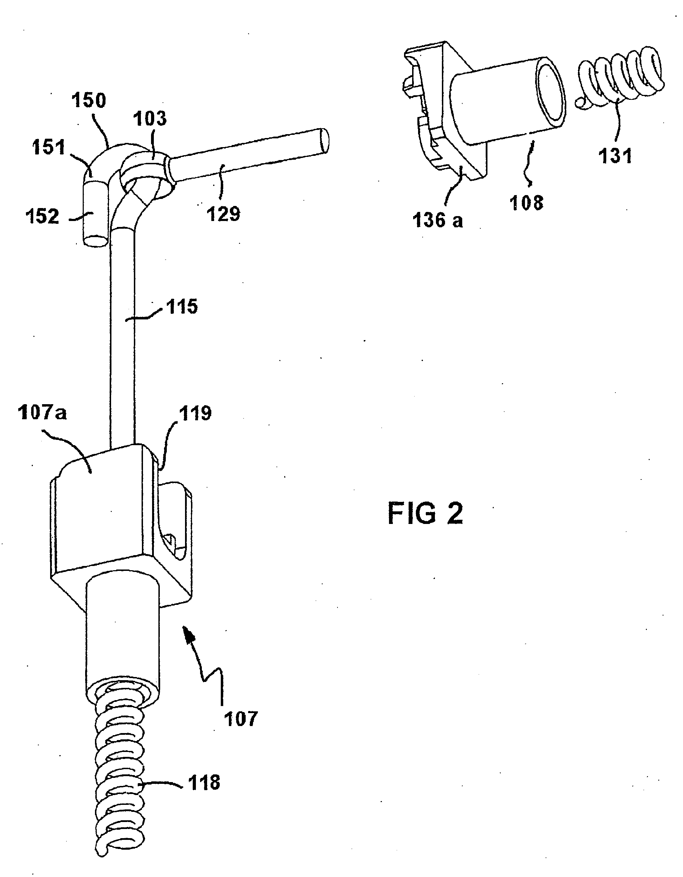

Ce problème est résolu par l'invention, comme 11. ressort des figures 2 à 5 où les pièces identiques ou similaires à des pièces déjà décrites à propos des figures 1a-1c sont désignées par la même référence augmentée de 100.

A la figure 2, on retrouve l'élément fixe 107, l'élément mobile 108, les ressorts à boudin 118 et 131 et la queue 115 du tirant équipant l'élément fixe 107. L'articulation selon l'invention se distingue toutefois de l'articulation de l'art antérieur par la configuration du crochet 150 dont l'extrémité 151 opposée à la queue 115 comporte une extension 152 parallèle à ladite queue.

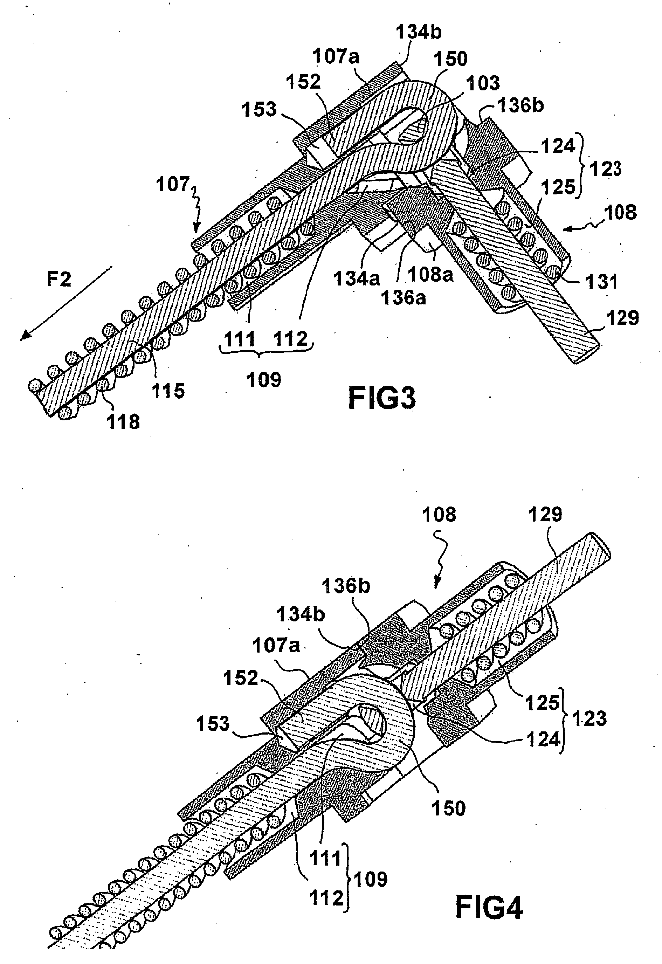

Comme il ressort, par ailleurs des figures 3 et 4 (où est représenté, en outre, le tirant 129 de l'élément mobile et où l'on voit les logements 109 et 123), l'extrémité 107a de l'élément fixe 107 dans laquelle est ménagée la partie distale 111 du logement 109 comporte un trou borgne 153 dans lequel est reçue l'extension 152. Sachant que le ressort 118 (figure 3) sollicite en permanence l'ensemble 115,150,152 dans la direction de la flèche F2, l'extension 152, une fois engagée dans le trou borgne 153, y demeure, étant toutefois entendu qu'elle peut y être plus ou moins enfoncée selon l'effort exercé sur le crochet 150 dans le sens contraire à la flèche F2. La, longueur du trou borgne 153 et celle de l'extension 152 doivent, bien évidemment, tenir compte du coulissement de l'ensemble 115,150,152 dans l'élément fixe 107 pour qu'à tout moment, et quelles que soient les positions respectives des éléments rigides 107 et 108, l'extension 152 soit engagée dans le trou borgne 153.

L'engagement de l'extension 152 dans le trou borgne 153 bloque évidemment en rotation le crochet 150.

Comme il ressort en particulier de la figure 2, l'extrémité 107a présente une encoche 119 pour permettre le passage de l'anneau 103 lorsque l'élément 108 est déboîté à 90° par rapport à l'élément 107 (figure 3). La figure 3 montre également que, dans cette position, la face d'appui 136a de l'extrémité 108a de l'élément mobile 108 vient buter contre la face d'appui 134a de l'extrémité 107a de l'élément fixe 107.

A la différence du mode de réalisation de l'articulation de l'art antérieur illustré aux figures 1a-1c, dans la forme d'exécution des figures 2 à 5, l'élément mobile 108 ne peut pas adopter une position désarticulée à 90° symétrique à celle qu'il a à la figure 3. En effet, il en est empêché par la venue en butée de la face d'appui 136b de l'extrémité 108a contre la face d'appui 134b de l'extrémité 107a.

A cela près, s'agissant des positions possibles de l'articulation, l'invention ne se distingue pas de l'art antérieur :
- à la figure 3, une première position stable est représentée qui correspond à celle de la figure 1c de l'art antérieur,
- à la figure 4, une deuxième position stable est représentée qui correspond à celle de la figure 1a de l'art antérieur, et

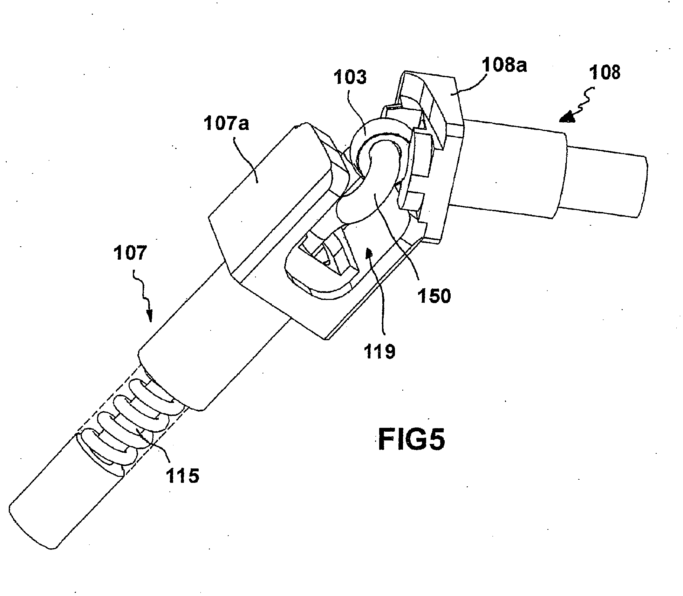

- à la figure 5, une position instable intermédiaire est représentée, qui correspond à celle de la figure 1b de l'art antérieur.

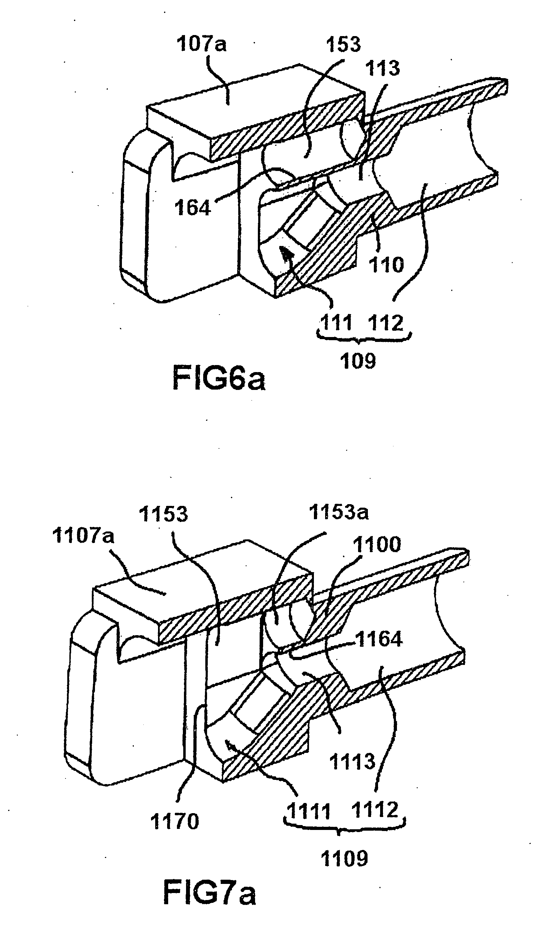

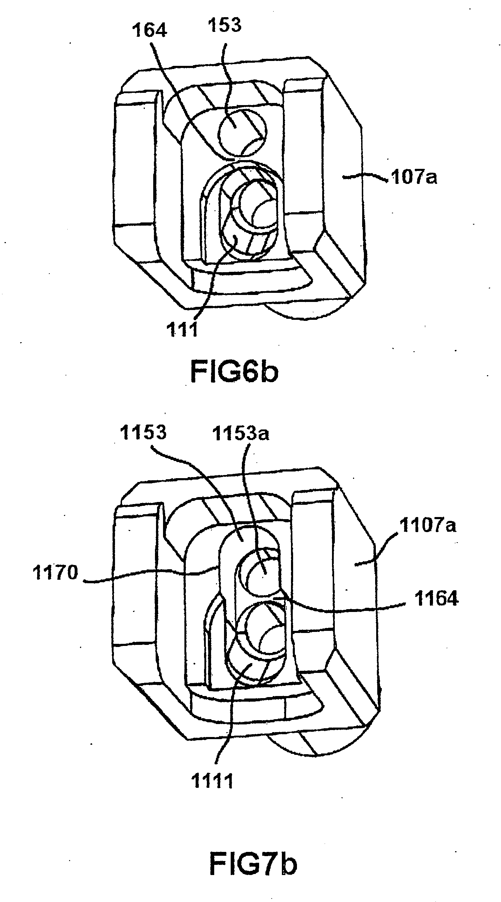

Les figures 6a et 6b montrent en détail 1a structure de l'extrémité 107a de l'élément fixe 107 adaptée à être appairée avec l'extrémité 108a de l'élément mobile 108.

On retrouve un passage 113 équivalent au passage 13 des figures 1a-1c ménagé dans une cloison 110 divisant le logement 109 en une partie proximale 111 et une partie distale 112. On voit que le trou borgne cylindrique 153 formant fourreau est séparé par une cloison 164, d'une part, de la partie proximale 111 du logement adaptée à recevoir le crochet 150 et, d'autre part, du passage 113.

Dans une variante d'exécution cependant, représentée aux figures 7a et 7b, la cavité 1153 du fourreau et la partie proximale 1111 du logement 1109 communiquent sur toute leur longueur, et il ne subsiste qu'une fraction de cloison 1164 au niveau du passage 1113. Comme on le voit, l'entrée commune 1170 à la cavité 1153 et à la partie proximale 1111 du logement 1109 est oblongue afin de maintenir la fonction antirotation de ladite cavité dont il ne subsiste de section circulaire que l'extrémité 1153a.

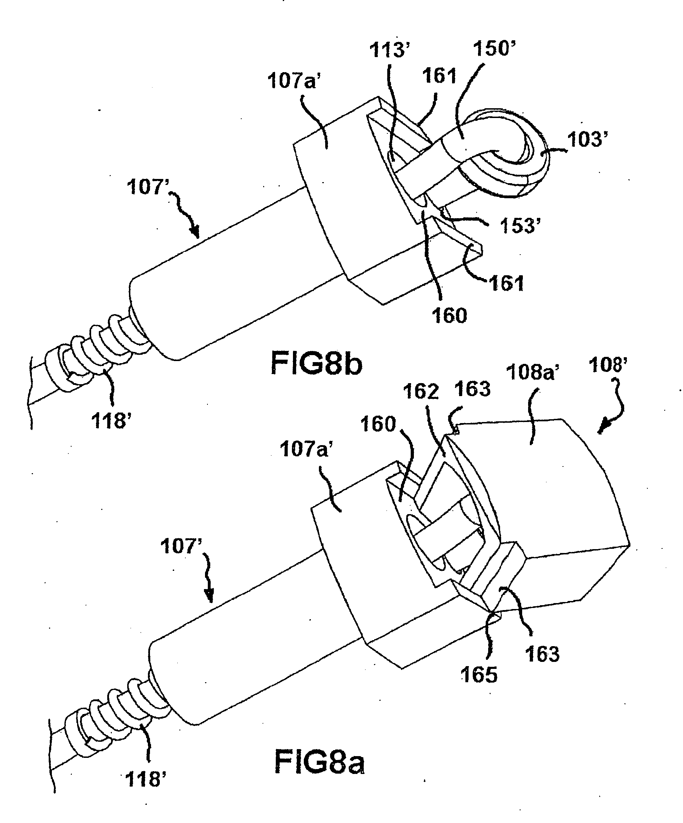

Si l'on en vient aux figures 8a et 8b, il y est représenté une variante d'exécution d'articulation selon l'invention où les pièces identiques ou similaires à des pièces déjà décrites à propos des figures 2 à 5 sont désignées par la même référence suivie du signe prime.

Cette variante ne se distingue de l'articulation précédente que par la configuration des faces libres des extrémités 107a' et 108a'. Comme on le voit, la face libre 160 de l'extrémité 107a' présente deux bordures parallèles en saillie 161 entre lesquelles peut venir se loger la face libre 162 de l'extrémité 108a'. De part et d'autre de ladite face d'extrémité 162, l'extrémité 108a' définit deux épaulements 163 venant s'appliquer sur la face supérieure des bordures 161 lorsque les éléments 107' et 108' sont alignés et dont l'extrémité 165 vient buter sur ladite face supérieure lorsque l'on fait pivoter l'élément 108', limitant ainsi la désarticulation à 45°.

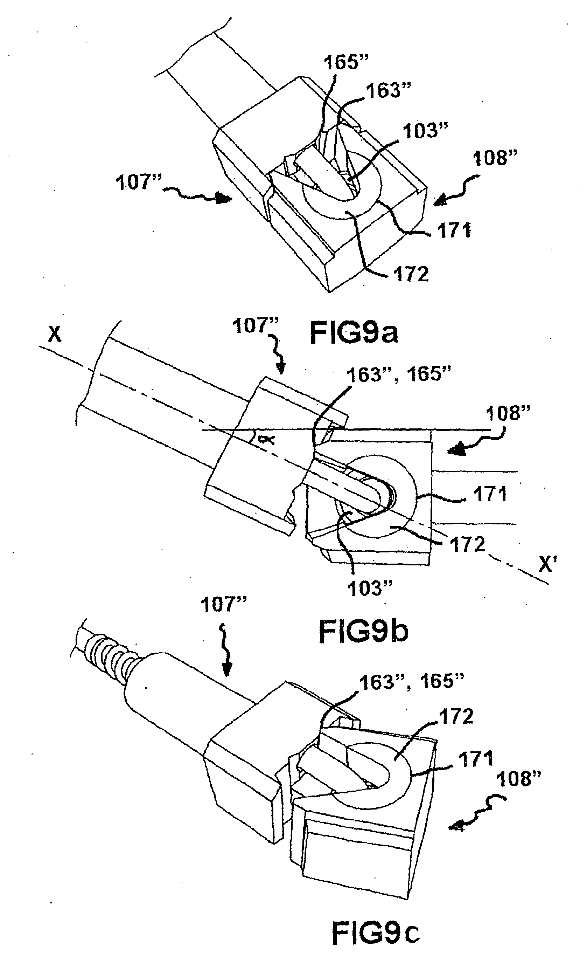

Les figures 9a-9c représentent une variante d'exécution où les pièces identiques ou similaires à des pièces déjà décrites à propos des figures 2 à 5 sont désignées par la même référence suivie du signe seconde. La variante des figures 9a-9c autorise un pivotement sur un angle α d'environ 25° de part et d'autre de l'axe X-X' , ce pivotement étant limités par la venue en butée de saillie 163" de l'élément mobile 108" dans des rainures 165" ménagées dans l'élément fixe 107".

Dans cette forme d'exécution, l'élément mobile 108" présente une découpe cylindrique 171 adaptée à recevoir un bouchon 172 qui vient bloquer l'anneau 103" dans l'élément mobile 108".

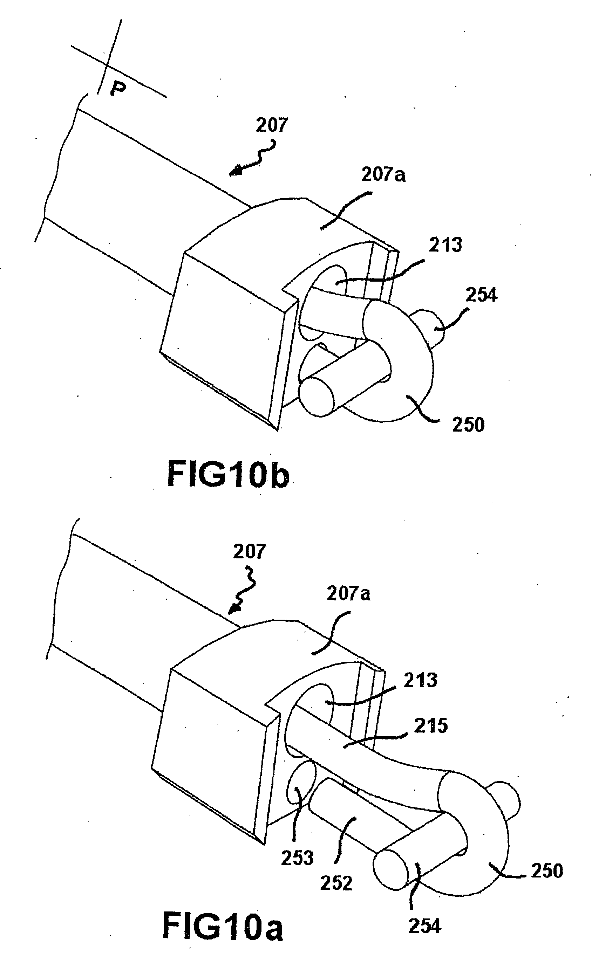

Si l'on en vient maintenant aux figures 10a et suivantes, il y est illustré l'application de l'invention à une charnière où les pièces identiques ou similaires à des pièces déjà décrites à propos des figures 1a-1c ou 2 à 5 sont désignées par la même référence augmentée de 200.

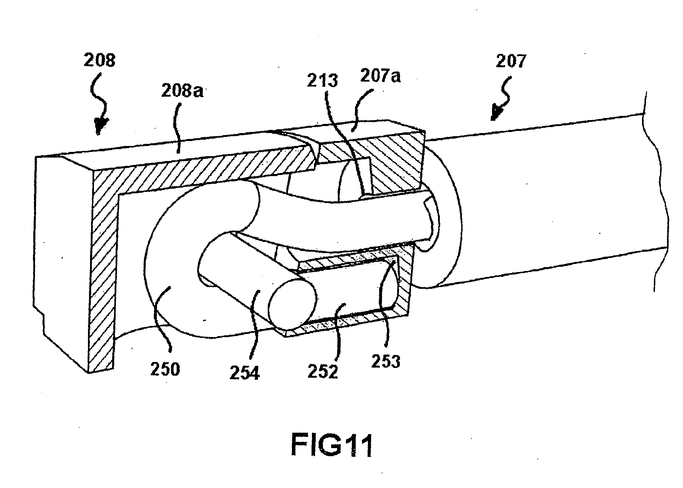

La figure 10a montre l'élément fixe 207 dont l'extrémité 207a comporte un passage 213 pour la queue 215 du crochet 250 et un trou borgne 253 adapté à recevoir l'extension 252 du crochet 250, passage et trou borgne qui sont plus clairement visibles à la figure 11 où est également représenté l'élément mobile 208. A la différence de la forme d'exécution représentée aux figures 2 à 5, le crochet 250 n'est pas en prise avec un anneau mais avec un axe 254.

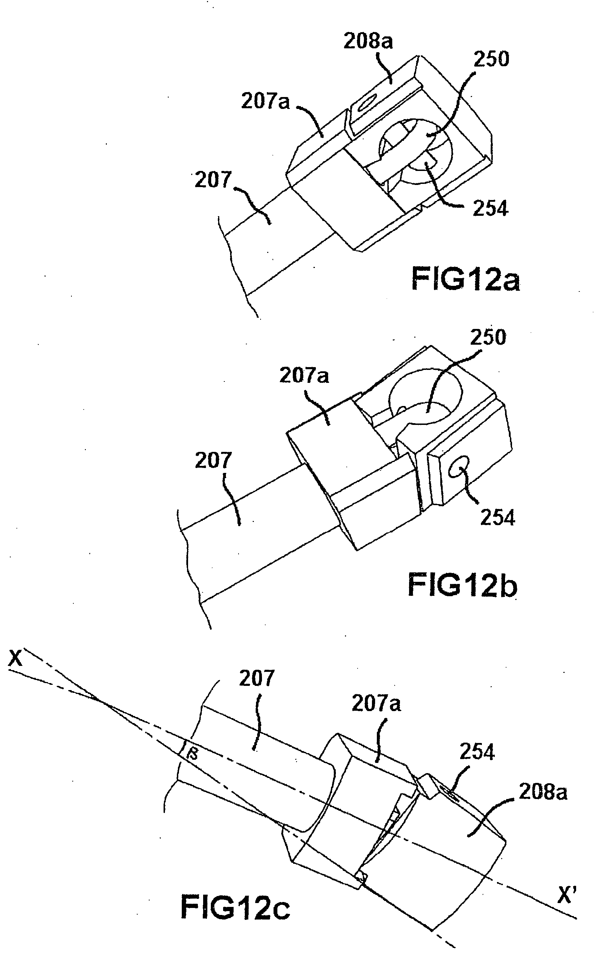

Une telle configuration permet une désarticulation sur un angle β de l'ordre de 15° (voir figures 12a-12c) de part et d'autre de l'axe X-X'. Il est bien entendu que l'invention n'est pas limitée aux formes d'exécution décrites et représentées. Ainsi, en particulier, la forme d'exécution du fourreau illustrée aux figures 7a-7b à propos d'une articulation pourrait tout aussi bien être appliquée à une charnière.

## Revendications

1. Mécanisme permettant un mouvement de pivotement relatif entre une extrémité d'un premier élément rigide (107;207) et une extrémité d'un second élément rigide (108;208), lesdites extrémités présentant des surfaces d'appui aptes à s'appairer respectivement l'une sur l'autre, des moyens élastiques (118,131) étant prévus pour maintenir l'appui entre lesdites surfaces, ledit mécanisme comprenant, d'une part, une pièce-pivot (150;250) en forme de crochet pourvu d'une queue rectiligne (115;215) montée coulissante dans un logement (109) dépendant d'un desdits éléments rigides, et, d'autre part, une pièce coopérante (103;254) dépendant de l'autre desdits éléments rigides, ladite pièce-pivot et ladite pièce coopérante étant sensiblement orthogonales l'une à l'autre, et la pièce coopérante étant engagée dans la zone évidée délimitée par la partie courbe du crochet (150;250), **caractérisé en ce qu'**à son extrémité opposée à ladite queue (115;215), ladite partie courbe du crochet comporte une extension (152;252) rectiligne et parallèle à ladite queue et **en ce qu'**un fourreau (153;253) est adapté à recevoir ladite extension, ladite extension (152;252) étant susceptible d'un déplacement en translation rectiligne et parallèle à ladite queue (115;215), tout en restant engagée en permanence dans ledit fourreau (153;253).

2. Mécanisme selon la revendication 1, **caractérisé en ce que** ledit fourreau est constitué par une partie de l'extrémité de l'élément rigide dans lequel est ménagée ledit logement (109), ledit fourreau déterminant une cavité (153;253) adjacente audit logement et propre à recevoir ladite extension (152;252).

3. Mécanisme selon la revendication 2, **caractérisé en ce que** ladite cavité est un trou borgne (153;253).

4. Mécanisme selon la revendication 2 ou 3, **caractérisé en ce que** la section transversale de la cavité est circulaire.

5. Mécanisme selon l'une quelconque des revendications 1 à 3, dans lequel ledit logement (109) comporte, séparées par une cloison (113), une partie proximale (111) dans laquelle ledit crochet (150;250) est captif et une partie distale (112), **caractérisé en ce que** ledit fourreau détermine une cavité de section transversale oblongue qui communique longitudinalement avec ladite partie proximale (111) dudit logement.

6. Mécanisme selon l'une quelconque des revendications 1 à 5, **caractérisé en ce que** ladite pièce coopérante est une seconde pièce-pivot (103) présentant une zone évidée limitée par une surface au moins partiellement courbe, ledit crochet (150) étant engagé dans ladite seconde pièce-pivot par pénétration dans sa zone évidée, de sorte que les deux pièces-pivots (150,103) peuvent pivoter l'une par rapport à l'autre, à la manière des maillons d'une chaîne.

7. Mécanisme selon la revendication 6, **caractérisé en ce que** ladite seconde pièce-pivot est un anneau (103).

8. Mécanisme selon l'une quelconque des revendications 1 à 5, **caractérisé en ce que** ladite pièce coopérante est un axe (254).

9. Mécanisme selon l'une quelconque des revendications 1 à 8, **caractérisé en ce que** lesdits éléments rigides (7,8) sont respectivement une branche de lunettes et une face de lunettes.

10. Mécanisme selon l'une quelconque des revendications 1 à 8, **caractérisé en ce que** lesdits éléments rigides appartiennent à une suite articulée pour un usage en robotique.

## Claims

1. Mechanism allowing a relative pivoting movement between an end of a first rigid element (107;207) and an end of a second rigid element (108;208), the said ends having bearing surfaces capable of matching respectively with one another, elastic means (118,131) being provided to maintain the contact between the said surfaces, the said mechanism comprising, on the one hand, a pivot piece (150;250) in the shape of a hook provided with a rectilinear shank (115;215) mounted slidingly in a housing (109) belonging to one of the said rigid elements, and, on the other hand, an interacting piece (103;254) belonging to the other of the said rigid elements, the said pivot piece and the said interacting piece being substantially orthogonal to one another, and the interacting piece being engaged in the recessed zone delimited by the curved portion of the hook (150;250), **characterized in that**, at its other end from the said shank (115;215), the said curved portion of the hook comprises an extension (152;252) that is rectilinear and parallel to the said shank and **in that** a sheath (153;253) is suitable for receiving the said extension, the said extension (152;252) being capable of a movement in translation that is rectilinear and parallel to the said shank (115;215), while remaining permanently engaged in the said sheath (153;253).

2. Mechanism according to Claim 1, **characterized in that** the said sheath consists of a portion of the end of the rigid element in which the said housing (109) is made, the said sheath determining a cavity (153;253) adjacent to the said housing and capable of receiving the said extension (152;252).

3. Mechanism according to Claim 2, **characterized in that** the said cavity is a blind hole (153;253).

4. Mechanism according to Claim 2 or 3, **characterized in that** the cross section of the cavity is circular.

5. Mechanism according to any one of Claims 1 to 3, in which the said housing (109) comprises, separated by a partition (113), a proximal portion (111) in which the said hook (150;250) is captive and a distal portion (112), **characterized in that** the said sheath determines a cavity of oblong cross section which communicates longitudinally with the said proximal portion (111) of the said housing.

6. Mechanism according to any one of Claims 1 to 5, **characterized in that** the said interacting piece is a second pivot piece (103) having a recessed zone limited by an at least partially curved surface, the said hook (150) being engaged in the said second pivot piece by penetrating into its recessed zone, so that the two pivot pieces (150,103) may pivot relative to one another like the links of a chain.

7. Mechanism according to Claim 6, **characterized in that** the said second pivot piece is a ring (103).

8. Mechanism according to any one of Claims 1 to 5, **characterized in that** the said interacting piece is a shaft (254).

9. Mechanism according to any one of Claims 1 to 8, **characterized in that** the said rigid elements (7,8) are respectively a side arm of spectacles and a face of spectacles.

10. Mechanism according to any one of Claims 1 to 8, **characterized in that** the said rigid elements belong to an articulated series for use in robotics.

## Patentansprüche

1. Mechanismus, der eine relative Schwenkbewegung zwischen einem Ende eines ersten starren Elements (107; 207) und einem Ende eines zweiten starren Elements (108; 208) gestattet, wobei diese Enden Auflageflächen aufweisen, die in der Lage sind, sich paarweise aneinander anzufügen, wobei elastische Mittel (119, 131) vorgesehen sind, um die Anlage zwischen diesen Flächen aufrecht zu erhalten, wobei der Mechanismus einerseits ein Zapfenteil (150; 250) in Form eines Hakens, der mit einem geradlinigen Schaft (115; 215) versehen ist, der in einer von einem der starren Elemente abhängigen Aufnahme (109) verschiebbar montiert ist, und andererseits ein zusammenwirkendes Teil (103; 254) umfasst, das von dem anderen der starren Elemente abhängt, wobei das Zapfenteil und das zusammenwirkende Teil im Wesentlichen zueinander senkrecht sind und das zusammenwirkende Teil in die ausgesparte, von dem gekrümmten Teil des Hakens (150; 250) begrenzte Zone eingesteckt ist, **dadurch gekennzeichnet, dass** der gekrümmte Teil des Hakens an seinem dem Schaft (115; 215) entgegengesetzten Ende eine geradlinige und zu dem Schaft parallele Verlängerung (152; 252) umfasst und dass eine Buchse (153; 253) dafür ausgelegt ist, die Verlängerung aufzunehmen, wobei die Verlängerung (152; 252) sich in geradliniger und zum Schaft (115; 215) paralleler Translation bewegen kann, wobei sie gleichzeitig ständig in die Buchse (153; 253) eingesteckt bleibt.

2. Mechanismus nach Anspruch 1, **dadurch gekennzeichnet, dass** die Buchse aus einem Teil des Endes des starren Elements besteht, in dem die Aufnahme (109) ausgespart ist, wobei die Buchse einen der Aufnahme benachbarten Hohlraum (153; 253) bildet, der die Verlängerung (152; 252) aufnehmen kann.

3. Mechanismus nach Anspruch 2, **dadurch gekennzeichnet, dass** der Hohlraum ein Sackloch (153; 253) ist.

4. Mechanismus nach Anspruch 2 oder 3, **dadurch gekennzeichnet, dass** der Querschnitt des Hohlraums kreisförmig ist.

5. Mechanismus nach einem der Ansprüche 1 bis 3, bei dem die Aufnahme (109), getrennt durch eine Trennwand (113), einen proximalen Teil (111), in dem der Haken (150; 250) gefangen ist, und einen distalen Teil (112) umfasst, **dadurch gekennzeichnet, dass** die Buchse einen Hohlraum mit einem langgestreckten Querschnitt bildet, der in Längsrichtung mit dem proximalen Teil (111) der Aufnahme in Verbindung ist.

6. Mechanismus nach einem der Ansprüche 1 bis 5, **dadurch** gekenntzeichnet, dass das zusammenwirkende Teil ein zweites Zapfenteil (103) ist, das eine ausgesparte Zone aufweiset, die durch eine mindestens teilweise gekrümmte Fläche begrenzt ist, wobei der Haken (150) in das zweite Zapfenteil durch Eindringen in seine ausgesparte Zone eingesteckt ist, so dass die beiden Zapfenteile (150, 103) sich zueinander nach der Art der Glieder einer Kette verschwenken können.

7. Mechanismus nach Anspruch 6, **dadurch gekennzeichnet, dass** das zweite Zapfenteil ein Ring (103) ist.

8. Mechanismus nach einem der Ansprüche 1 bis 5, **dadurch gekennzeichnet, dass** das zusammenwirkende Teil eine Achse (254) ist.

9. Mechanismus nach einem der Ansprüche 1 bis 8, **dadurch gekennzeichnet, dass** die starren Elemente (7, 8) ein Brillenbügel bzw. eine Brillenfront sind.

10. Mechanismus nach einem der Ansprüche 1 bis 8, **dadurch gekennzeichnet, dass** die starren Elemente zu einer Gelenkfolge für einen Gebrauch in der Robotik gehören.
